(19) **Europäisches Patentamt**
**European Patent Office**
**Office européen des brevets**

(11) **EP 2 371 915 A1**

(12) **EUROPEAN PATENT APPLICATION**
published in accordance with Art. 153(4) EPC

(43) Date of publication:
**05.10.2011 Bulletin 2011/40**

(51) Int Cl.:
**C09J 7/00** (2006.01) **C09J 11/00** (2006.01)
**C09J 133/04** (2006.01)

(21) Application number: **09830149.2**

(22) Date of filing: **25.11.2009**

(86) International application number:
**PCT/JP2009/006336**

(87) International publication number:
**WO 2010/064378 (10.06.2010 Gazette 2010/23)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **03.12.2008 JP 2008308426**

(71) Applicant: **Nitto Denko Corporation**
**Ibaraki-shi**
**Osaka 567-8680 (JP)**

(72) Inventors:
• **TSUBAKI, Hiroyuki**
**Ibaraki-shi**
**Osaka 567-8680 (JP)**

• **INOKUCHI, Shinji**
**Ibaraki-shi**
**Osaka 567-8680 (JP)**
• **HIROSE, Isao**
**Ibaraki-shi**
**Osaka 567-8680 (JP)**
• **KOSAKA, Tokuhisa**
**Ibaraki-shi**
**Osaka 567-8680 (JP)**

(74) Representative: **Grünecker, Kinkeldey,**
**Stockmair & Schwanhäusser**
**Anwaltssozietät**
**Leopoldstrasse 4**
**80802 München (DE)**

(54) **DOUBLE-FACED PRESSURE-SENSITIVE ADHESIVE TAPE FOR AFFIXING DECORATIVE PANEL**

(57) A double-sided pressure-sensitive adhesive tape is used for fixing decorative panels and includes a pressure-sensitive adhesive layer containing bubbles and/or hollow microspheres. The pressure-sensitive adhesive layer is preferably formed from an acrylic pressure-sensitive adhesive, particularly an active-energy-ray-curable acrylic pressure-sensitive adhesive. The double-sided pressure-sensitive adhesive tape for fixing decorative panels preferably has a toluene emission of 15 µg/g or less and preferably has a surface lightness L* of 60 to 30. The adhesive tape can be a double-sided pressure-sensitive adhesive tape for fixing decorative panels, which excels in conformability to curved surfaces and bumps, resilience resistance, and adhesiveness and which may thereby show excellent adhesive properties even when used for fixing a decorative panel to an adherend of a complicated shape with a curved surface or bumps or for fixing a narrow decorative panel to an adherend.

EP 2 371 915 A1

**Description**

Technical Field

The present invention relates to a double-sided pressure-sensitive adhesive tape for fixing decorative panels. More specifically the present invention relates to a double-sided pressure-sensitive adhesive tape for fixing decorative panels, which is a bubble-containing pressure-sensitive adhesive tape including a pressure-sensitive adhesive layer containing bubbles and/or hollow microspheres.

Background Art

Decorative panels have been attached to the surface typically of products to impart graphical design functions or decorativeness to the products in, for example, household electrical appliances, office automation appliances, furniture, kitchen facilities (kitchen materials), and flooring materials. To attach such decorative panels, pressure-sensitive adhesive tapes (particularly double-sided pressure-sensitive adhesive tapes) may be used from the viewpoint of handiness (see, for example, Patent Literature (PTL) 1).
Of such office automation appliances and household electrical appliances, more and more of those with designs heavily using curved surfaces and portions of complicated shapes have been recently employed. When applied to such curved surfaces and portions of complicated shapes, however, the customary double-sided pressure-sensitive adhesive tapes suffer from problems such as peeling off or falling of the decorative panel, because they lack adhesive properties to curved surfaces (e.g., conformability (fittability) to curved surfaces, and resilience resistance of bent members) and conformability to bumps. Independently, when applied to a decorative panel having a small bonding area as typically of a narrow decorative panel, the customary double-sided pressure-sensitive adhesive tapes may show insufficient adhesiveness. In addition, such double-sided pressure-sensitive adhesive tapes should less emit or evolve volatile organic compounds (VOC) and should show so-called "low VOC emission," from the viewpoints of environmental friendliness and safety.

Citation List

Patent Literature

    PTL 1: Japanese Unexamined Patent Application Publication (JP-A) No. 2000-110330

Summary of Invention

Technical Problem

An object of the present invention is to provide a double-sided pressure-sensitive adhesive tape for fixing decorative panels, which excels in conformability to curved surfaces and bumps, in resilience resistance, and in adhesiveness and which may exhibit satisfactory adhesive properties even when used to fix a decorative panel to an adherend with a complicated shape having a curved surface and/or bumps or even when used to fix a narrow decorative panel to an adherend.

Solution to Problem

After intensive investigations to achieve the object, the present inventors have found that a bubble-containing double-sided pressure-sensitive adhesive tape including a pressure-sensitive adhesive layer containing bubbles and/or hollow microspheres can be used as a double-sided pressure-sensitive adhesive tape for fixing decorative panels, which excels in adhesive properties to curved surfaces and has satisfactory adhesiveness and good resilience resistance. The present invention has been made based on these findings.
Specifically, the present invention provides a double-sided pressure-sensitive adhesive tape for fixing decorative panels, which includes a pressure-sensitive adhesive layer containing bubbles and/or hollow microspheres.
In one embodiment of the double-sided pressure-sensitive adhesive tape for fixing decorative panels according to the present invention, the pressure-sensitive adhesive layer is formed from an acrylic pressure-sensitive adhesive including an acrylic polymer as a base polymer, the acrylic polymer containing an alkyl (meth)acrylate as a main monomer component.

In another embodiment of the double-sided pressure-sensitive adhesive tape for fixing decorative panels, the acrylic pressure-sensitive adhesive is an active-energy-ray-curable acrylic pressure-sensitive adhesive that is curable by the action of an active energy ray.

In yet another embodiment of the double-sided pressure-sensitive adhesive tape for fixing decorative panels, the adhesive tape has a toluene emission (emits toluene, if any, in an amount) of 15 μg/g or less.

In another embodiment of the double-sided pressure-sensitive adhesive tape for fixing decorative panels, the adhesive tape has a surface lightness L* of 60 to 30. Advantageous Effects of Invention

The bubble-containing double-sided pressure-sensitive adhesive tape according to the present invention includes a pressure-sensitive adhesive layer containing bubbles and/or hollow microspheres and may thereby be a double-sided pressure-sensitive adhesive tape for fixing decorative panels which realizes high adhesiveness, good resilience resistance, and excellent conformability to curved surfaces, bumps, and convex-concave surfaces and which shows good adhesive properties and satisfactory adhesion reliability. When using the specific pressure-sensitive adhesive, the bubble-containing double-sided pressure-sensitive adhesive tape may be a double-sided pressure-sensitive adhesive tape for fixing decorative panels which shows excellent VOC control (low VOC emission).

Brief Description of Drawings

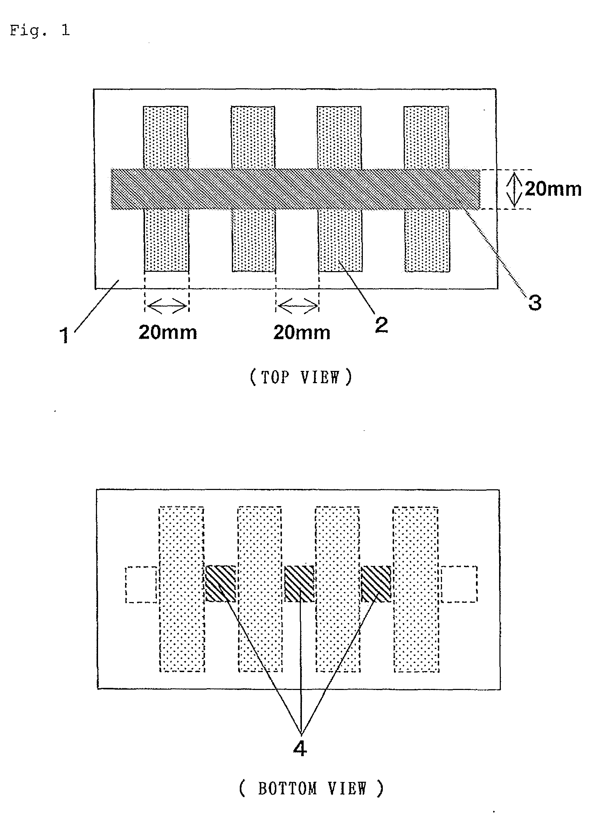

[Fig. 1] Fig. 1 is a schematic diagram (top view and bottom view) showing how to evaluate bump absorptivity. Description of Embodiments

The double-sided pressure-sensitive adhesive tape for fixing decorative panels according to the present invention (hereinafter also simply referred to as a "pressure-sensitive adhesive tape" or "double-sided pressure-sensitive adhesive tape") includes at least a pressure-sensitive adhesive layer (tacky adhesive layer) formed from a pressure-sensitive adhesive (tacky adhesive) containing bubbles and/or hollow microspheres. Hereinafter a "pressure-sensitive adhesive (pressure-sensitive adhesive layer) containing bubbles and/or hollow microspheres" is also referred to as a "bubble-containing pressure-sensitive adhesive (bubble-containing pressure-sensitive adhesive layer)"; and a "pressure-sensitive adhesive tape containing bubbles and/or hollow microspheres" is also referred to as a "bubble-containing pressure-sensitive adhesive tape." As used herein the term "tape" also includes one in the form of a sheet and one which has been processed into a shape typically of a frame according to the shape of the adherend.

[Bubble-Containing Pressure-Sensitive Adhesive, Bubble-Containing Pressure-Sensitive Adhesive Layer]

The bubble-containing pressure-sensitive adhesive layer for use in the present invention contains bubbles and/or hollow microspheres. Containing at least one of bubbles and hollow microspheres improves bump absorptivity (conformability to bumps) and resilience resistance. The bubble-containing pressure-sensitive adhesive layer preferably further contains one or more fluorochemical surfactants each intramolecularly having an oxy-($C_2$-$C_3$) alkylene group and a fluorinated hydrocarbon group (fluorochemical surfactants each intramolecularly having one or more oxy-($C_2$-$C_3$) alkylene groups and one or more fluorinated hydrocarbon groups). The use of such fluorochemical surfactants intramolecularly having the structures lowers the adhesion (blocking) between the hollow microspheres and the polymer in the bubble-containing pressure-sensitive adhesive layer to exhibit stress dispersibility, and this allows the pressure-sensitive adhesive tape to have more satisfactory conformability and adhesive properties to curved surfaces, bumps (irregularities), and convex-concave surfaces.

(Bubbles)

The amount of bubbles to be contained in the bubble-containing pressure-sensitive adhesive layer is generally 5 to 50 percent by volume, preferably 5 to 40 percent by volume, and more preferably 5 to 30 percent by volume, based on the total volume of the bubble-containing pressure-sensitive adhesive layer, though it may be chosen appropriately within a range not impairing, for example, adhesive properties. The bubble-containing pressure-sensitive adhesive layer, if having a bubble content (bubble fraction) of less than 5 percent by volume, may not sufficiently exhibit a stress relaxation function and may thereby be often poor in resilience resistance. In contrast, the bubble-containing pressure-sensitive adhesive layer, if having a bubble content of more than 50 percent by volume, may suffer from the formation of bubbles penetrating the pressure-sensitive adhesive layer to thereby have poor adhesiveness or may often become excessively soft (flexible) to have a poor shear bond strength.

The bubbles to be contained in the bubble-containing pressure-sensitive adhesive layer are basically preferably closed cells but may be a mixture of closed cells and open cells.

The bubbles are generally spheroidal or spherical, but they may be irregular spheroidal. The average diameter of the bubbles is not particularly limited and may be chosen within the range of typically 1 to 1000 $\mu$m, preferably 10 to 500 $\mu$m, and more preferably 30 to 300 $\mu$m.

Examples of a gas component (gaseous component constituting bubbles; hereinafter also referred to as a "bubble-constituting gas") contained in the bubbles include, but are not limited to, inert gases such as nitrogen, carbon dioxide, and argon gases; and other various gaseous components such as air. When a bubble-constituting gas is incorporated typically before carrying out a reaction such as polymerization reaction, the bubble-constituting gas should be one that does not adversely affect the reaction. Nitrogen is preferably used as the bubble-constituting gas, typically because it is inert to such reactions and is inexpensive.

(Hollow Microspheres)

The use of hollow microspheres as one of components constituting the bubble-containing pressure-sensitive adhesive layer helps the bubble-containing pressure-sensitive adhesive layer, for example, to have a further increased shear bond strength (shear adhesive strength) and to show further improved workability. Each of different types of hollow microspheres may be used alone or in combination.

The hollow microspheres for use in the present invention may be either hollow inorganic microspheres or hollow organic microspheres. Specifically, exemplary hollow inorganic microspheres include hollow balloons made of glass, such as hollow glass balloons; hollow balloons made of metallic compounds, such as hollow alumina balloons; and hollow balloons made of ceramics or porcelain, such as hollow ceramic balloons. Exemplary hollow organic microspheres include hollow balloons made from resins, such as hollow acrylic resin balloons and hollow poly(vinylidene chloride) balloons.

Though not critical, the particle size (average particle diameter) of the hollow microspheres may be chosen within the range of typically 1 to 500 $\mu$m, preferably 5 to 200 $\mu$m, and furthermore preferably 10 to 100 $\mu$m.

Though not critical, the specific gravity of the hollow microspheres may be chosen within the range of typically 0.1 to 0.8 g/cm$^3$ and preferably 0.12 to 0.5 g/cm$^3$. Hollow microspheres, if having a specific gravity of less than 0.1 g/cm$^3$, may be difficult to be uniformly dispersed in a bubble-containing pressure-sensitive adhesive, because they may undesirably significantly rise to the surface during mixing with other components. In contrast, hollow microspheres, if having a specific gravity of more than 0.8 g/cm$^3$, may be excessively expensive and cause higher cost.

Though not critical, the amount of the hollow microspheres in the bubble-containing pressure-sensitive adhesive layer may be chosen within such a range that the hollow microspheres occupy 5 to 50 percent by volume, preferably 10 to 50 percent by volume, and furthermore preferably 15 to 40 percent by volume, of the total volume of the bubble-containing pressure-sensitive adhesive layer. Hollow microspheres, if used in such an amount as to occupy less than 5 percent by volume of the pressure-sensitive adhesive layer, may exhibit their effects insufficiently. In contrast, hollow microspheres, if used in such an amount as to occupy more than 50 percent by volume of the pressure-sensitive adhesive layer, may adversely affect the bond strength of the pressure-sensitive adhesive layer.

(Fluorochemical Surfactants)

The fluorochemical surfactants (fluorine-containing surfactants) for use in the present invention are preferably fluorochemical surfactants each intramolecularly having an oxy-(C$_2$-C$_3$) alkylene group and a fluorinated hydrocarbon group. Fluorochemical surfactants intramolecularly having an oxy-(C$_2$-C$_3$) alkylene group, when used, help to reduce the adhesion (blocking) and frictional drag between the hollow microspheres and the base polymer in the bubble-containing pressure-sensitive adhesive layer and allow the bubble-containing pressure-sensitive adhesive layer to exhibit satisfactory stress dispersibility and to have higher adhesiveness. Fluorochemical surfactants further intramolecularly having a fluorinated hydrocarbon group, when used, may exhibit an effect of improving the blendability and stability of the bubbles, in addition to the above effects.

Of the fluorochemical surfactants, preferred are, but not limited to, nonionic surfactants, because such nonionic surfactants can be dispersed more satisfactorily in the base polymer. Each of different fluorochemical surfactants may be used alone or in combination.

The oxy-(C$_2$-C$_3$) alkylene group is represented by the formula: -R-O-, wherein R represents a linear or branched-chain alkylene group having 2 or 3 carbon atoms. Specific examples of the oxy-(C$_2$-C$_3$) alkylene group include oxyethylene group (-CH$_2$CH$_2$O-) and oxypropylene group [-CH$_2$CH(CH$_3$)O-]. The fluorochemical surfactant may contain one or more types of such oxy-(C$_2$-C$_3$) alkylene groups per molecule. The oxy-(C$_2$-C$_3$) alkylene group may exist in any form such as an alcohol in which the terminal oxygen is bonded to hydrogen atom; an ether in which the terminal oxygen is bonded to another hydrocarbon group; and an ester in which the terminal oxygen is bonded via carbonyl group to another hydrocarbon group. The oxy-(C$_2$-C$_3$) alkylene structure may also exist as part of a cyclic structure such as a cyclic ether or lactone.

The fluorinated hydrocarbon group is preferably, but is not limited to, a perfluoro group. The perfluoro group may be monovalent or multivalent (bivalent or higher). The fluorinated hydrocarbon group may have a double bond and/or a triple bond and may have any of linear, branched, and cyclic structures. The fluorinated hydrocarbon group is not particularly limited in number of carbon atoms and may have one or more carbon atoms, preferably 3 to 30 carbon atoms, and more preferably 4 to 20 carbon atoms. The fluorochemical surfactant may contain one or more types of fluorinated hydrocarbon groups per molecule.

Though not limited, copolymers each containing, as monomer components, both a monomer having an oxy-($C_2$-$C_3$) alkylene group and a monomer having a fluorinated hydrocarbon group are preferred as fluorochemical surfactants. Such copolymers may be copolymers of any copolymerization form, such as block copolymers and graft copolymers.

Examples of the block copolymers (copolymers each having an oxy-($C_2$-$C_3$) alkylene group and a fluorinated hydrocarbon group in their principal chain) include polyoxyethylene perfluoroalkyl ethers, perfluoroalkylated polyoxyethylenes, polyoxypropylene perfluoroalkyl ethers, polyoxyisopropylene perfluoroalkyl ethers, perfluoroalkylated polyoxyethylene sorbitans, perfluoroalkylated polyoxyethylene-polyoxypropylene block copolymers, and perfluoroalkylated polyoxyethylene glycols.

Of the graft copolymers (copolymers each having an oxy-($C_2$-$C_3$) alkylene group and a fluorinated hydrocarbon group in their side chains), preferred are copolymers each containing, as monomer components, at least a vinyl compound having a polyoxyalkylene group with a vinyl compound having a fluorinated hydrocarbon group, of which acrylic copolymers are more preferred. Exemplary vinyl compounds each having a polyoxyalkylene group include polyoxyalkylene (meth)acrylates such as polyoxyethylene (meth)acrylates, polyoxypropylene (meth)acrylates, and polyoxyethylene-polyoxypropylene (meth)acrylates. Exemplary vinyl compounds each having a fluorinated hydrocarbon group include (meth)acrylic esters each having a fluorinated hydrocarbon moiety, including perfluoroalkyl (meth)acrylates such as perfluorobutyl (meth)acrylates, perfluoroisobutyl (meth)acrylates, and perfluoropentyl (meth)acrylates.

The fluorochemical surfactants may further intramolecularly have one or more other structures, such as an alicyclic hydrocarbon group and an aromatic hydrocarbon group, in addition to the above structures. They may also contain a variety of functional groups such as carboxyl group, sulfonic group, cyano group, amido group, and amino group, within ranges not impeding dispersion in the base polymer. Typically, a fluorochemical surfactant, if being a vinyl copolymer, may further contain one or more monomer components copolymerizable with the vinyl compound having a polyoxyalkylene group and the vinyl compound having a fluorinated hydrocarbon group, as monomer components. Each of different copolymerizable monomers may be used alone or in combination.

Preferred examples of the copolymerizable monomer components include alkyl (meth)acrylates whose alkyl moiety having 1 to 20 carbon atoms, such as undecyl (meth)acrylates and dodecyl (meth)acrylates; (meth)acrylic esters each having an alicyclic hydrocarbon group, such as cyclopentyl (meth)acrylates; and (meth)acrylic esters each having an aromatic hydrocarbon group, such as phenyl (meth)acrylates. Exemplary copolymerizable monomer components further include carboxyl-containing monomers such as maleic acid and crotonic acid; sulfo-containing monomers such as sodium vinylsulfonate; aromatic vinyl compounds such as styrene and vinyltoluene; olefins or dienes such as ethylene and butadiene; vinyl ethers such as vinyl alkyl ethers; amido-containing monomers such as acrylamide; amino-containing monomers; glycidyl-containing monomers such as methylglycidyl (meth)acrylates; isocyanate-containing monomers such as 2-methacryloyloxyethyl isocyanate; and (meth)acryloylmorpholines. Copolymerizable monomer components usable herein further include multifunctional copolymerizable monomers (multifunctional monomers) such as dipentaerythritol hexa(meth)acrylates and divinylbenzene.

Though not critical in molecular weight, the fluorochemical surfactant is preferably one having a weight-average molecular weight of less than 20000 (e.g., 500 or more and less than 20000) for highly effectively reducing blocking and frictional drag between the base polymer and hollow microspheres in the bubble-containing pressure-sensitive adhesive layer. To contain bubbles more satisfactorily and more stably therein, the bubble-containing pressure-sensitive adhesive layer more preferably further contains a fluorochemical surfactant having a weight-average molecular weight of 20000 or more in combination with the fluorochemical surfactant having a weight-average molecular weight of less than 20000. The weight-average molecular weight of the former fluorochemical surfactant is typically 20000 to 100000, preferably 22000 to 80000, and more preferably 24000 to 60000.

Examples of the fluorochemical surfactants (fluorochemical surfactants each having an oxy-($C_2$-$C_3$) alkylene group and a fluorinated hydrocarbon group) having a weight-average molecular weight of less than 20000 include products supplied under the trade names "FTERGENT 251" and "FTX-218" by NEOS Co., Ltd.; products supplied under the trade names "Megafac F-477" and "Megafac F-470" by DIC Corporation; and products supplied under the trade names "Surflon S-381", "Surflon S-383", "Surflon S-393", "Surflon KH-20", and "Surflon KH-40" by AGC Seimi Chemical Co., Ltd. Examples of the fluorochemical surfactants (fluorochemical surfactants each having an oxy-($C_2$-$C_3$) alkylene group and a fluorinated hydrocarbon group) having a weight-average molecular weight of 20000 or more include products supplied under the trade names "EFTOP EF-352" and "EFTOP EF-801" by JEMCO Inc.; and a product supplied under the trade name "Unidyne TG-656" by Daikin Industries, Ltd.

Though not critical, the amount (in terms of solids content) of the fluorochemical surfactants may be chosen within the range of 0.01 to 5 parts by weight, preferably 0.02 to 3 parts by weight, and more preferably 0.03 to 1 part by weight, per 100 parts by weight of total monomer components for constituting the base polymer (e.g., total monomer components for constituting the acrylic polymer) in the bubble-containing pressure-sensitive adhesive. Fluorochemical surfactants, if used in an amount of less than 0.01 part by weight, may not sufficiently exhibit their effects on adhesive properties; and fluorochemical surfactants, if used in an amount of more than 5 parts by weight, may adversely affect the adhesive performance.

(Base Polymer)

Though not limited, the base polymer in the pressure-sensitive adhesive constituting the bubble-containing pressure-sensitive adhesive layer for use herein may be chosen as appropriate from base polymers for use in known pressure-sensitive adhesives (tacky adhesives) such as acrylic pressure-sensitive adhesives, rubber pressure-sensitive adhesives, vinyl alkyl ether pressure-sensitive adhesives, silicone pressure-sensitive adhesives, polyester pressure-sensitive adhesives, polyamide pressure-sensitive adhesives, urethane pressure-sensitive adhesives, fluorine pressure-sensitive adhesives, and epoxy pressure-sensitive adhesives. Specifically, the pressure-sensitive adhesive (bubble-containing pressure-sensitive adhesive) constituting the bubble-containing pressure-sensitive adhesive layer for use herein may be a composition using any of known pressure-sensitive adhesives such as acrylic pressure-sensitive adhesives, rubber pressure-sensitive adhesives, vinyl alkyl ether pressure-sensitive adhesives, silicone pressure-sensitive adhesives, polyester pressure-sensitive adhesives, polyamide pressure-sensitive adhesives, urethane pressure-sensitive adhesives, fluorine pressure-sensitive adhesives, and epoxy pressure-sensitive adhesives. Among them, acrylic pressure-sensitive adhesives (bubble-containing acrylic pressure-sensitive adhesives) are preferred for their high adhesiveness and satisfactory weatherability. As used herein the term "base polymer of the pressure-sensitive adhesive (in the pressure-sensitive adhesive)" refers to a base polymer constituting the pressure-sensitive adhesive layer formed from the pressure-sensitive adhesive.

Each of different base polymers may be used alone or in combination. The base polymers are preferably base polymers for use in known acrylic pressure-sensitive adhesives. Such known acrylic pressure-sensitive adhesives generally contain acrylic polymers [of which acrylic polymers including (meth)acrylic esters as monomer components are preferred] as base polymers. The acrylic polymer for use herein preferably includes one or more alkyl (meth)acrylates (alkyl (meth)acrylates each having a linear or branched-chain alkyl group) as main monomer components. Exemplary alkyl (meth)acrylates in the acrylic polymer include alkyl (meth)acrylates whose alkyl moiety having 1 to 20 carbon atoms [$C_1$-$C_{20}$ alkyl esters of (meth)acrylic acids], such as methyl (meth)acrylates, ethyl (meth)acrylates, propyl (meth)acrylates, isopropyl (meth)acrylates, butyl (meth)acrylates, isobutyl (meth)acrylates, s-butyl (meth)acrylates, t-butyl (meth)acrylates, pentyl (meth)acrylates, isopentyl (meth)acrylates, hexyl (meth)acrylates, heptyl (meth)acrylates, octyl (meth)acrylates, 2-ethylhexyl (meth)acrylates, isooctyl (meth)acrylates, nonyl (meth)acrylates, isononyl (meth)acrylates, decyl (meth)acrylates, isodecyl (meth)acrylates, undecyl (meth)acrylates, dodecyl (meth)acrylates, tridecyl (meth)acrylates, tetradecyl. (meth)acrylates, pentadecyl (meth)acrylates, hexadecyl (meth)acrylates, heptadecyl (meth)acrylates, octadecyl (meth)acrylates, nonadecyl (meth)acrylates, and eicosyl (meth)acrylates. Among them, alkyl (meth)acrylates whose alkyl moiety having 2 to 14 carbon atoms are preferred, and alkyl (meth)acrylates whose alkyl moiety having 2 to 10 carbon atoms are more preferred. Each of different alkyl (meth)acrylates may be used alone or in combination.

The alkyl (meth)acrylates are used as a major monomer component (main monomer component) of the acrylic polymer, and it is important that the content thereof be 60 percent by weight or more, and preferably 80 percent by weight or more, based on the total amount of monomer components constituting the acrylic polymer.

The acrylic polymer may further include one or more copolymerizable monomers such as polar-group-containing monomers and multifunctional monomers, as monomer components. Such copolymerizable monomers, if used as monomer components, may typically help the pressure-sensitive adhesive (tacky adhesive) to have a higher bond strength to an adherend and a higher cohesive strength. Each of different copolymerizable monomers can be used alone or in combination.

Exemplary polar-group-containing monomers include carboxyl-containing monomers such as (meth)acrylic acids, itaconic acid, maleic acid, fumaric acid, crotonic acid, and isocrotonic acid, and anhydrides of them, such as maleic anhydride; hydroxyl-containing monomers including hydroxylalkyl (meth)acrylates such as hydroxyethyl (meth)acrylates, hydroxypropyl (meth)acrylates, and hydroxybutyl (meth)acrylates; amido-containing monomers such as acrylamide, methacrylamide, N,N-dimethyl(meth)acrylamides, N-methylol(meth)acrylamides, N-methoxymethyl(meth)acrylamides, and N-butoxymethyl(meth)acrylamides; amino-containing monomers such as aminoethyl (meth)acrylates, dimethylaminoethyl (meth)acrylates, and t-butylaminoethyl (meth)acrylates; glycidyl-containing monomers such as glycidyl (meth)acrylates and methylglycidyl (meth)acrylates; cyano-containing monomers such as acrylonitrile and methacrylonitrile; heterocycle-containing vinyl monomers such as N-vinyl-2-pyrrolidone, (meth)acryloylmorpholines, N-vinylpyridine, N-vinylpiperidone, N-vinylpyrimidine, N-vinylpiperazine, N-vinylpyrrole, N-vinylimidazole, and N-vinyloxazole; alkoxyalkyl (meth)acrylate monomers such as methoxyethyl (meth)acrylates and ethoxyethyl (meth)acrylates; sulfo-containing monomers such as sodium vinylsulfonate; phosphate-containing monomers such as 2-hydroxyethylacryloyl phosphate; imido-containing monomers such as cyclohexylmaleimide and isopropylmaleimide; and isocyanate-containing monomers such as 2-methacryloyloxyethyl isocyanate. Of the polar-group-containing monomers, acrylic acid and other carboxyl-containing monomers and anhydrides of them are preferred.

The amount (proportion) of the polar-group-containing monomers is 30 percent by weight or less (e.g., 1 to 30 percent by weight), and preferably 3 to 20 percent by weight, based on the total amount of monomer components for constituting the acrylic polymer. Polar-group-containing monomers, if present in an excessively large amount of more than 30 percent by weight, may typically cause the acrylic pressure-sensitive adhesive to have an excessively high cohesive strength and may cause the bubble-containing pressure-sensitive adhesive layer to have insufficient tackiness. Polar-group-containing monomers, if present in an excessively small amount (e.g., less than 1 percent by weight based on the total amount of monomer components for constituting the acrylic polymer), may cause the acrylic pressure-sensitive adhesive to have an insufficient cohesive strength and to thereby fail to have a high shear bond strength.

Examples of the multifunctional monomers include hexanediol di(meth)acrylates, butanediol di(meth)acrylates, (poly)ethylene glycol di(meth)acrylates, (poly)propylene glycol di(meth)acrylates, neopentyl glycol di(meth)acrylates, pentaerythritol di(meth)acrylates, pentaerythritol tri(meth)acrylates, dipentaerythritol hexa(meth)acrylates, trimethylolpropane tri(meth)acrylates, tetramethylolmethane tri(meth)acrylates, allyl (meth)acrylates, vinyl (meth)acrylates, divinylbenzene, epoxy acrylates, polyester acrylates, and urethane acrylates.

The amount of the multifunctional monomers is 2 percent by weight or less (e.g., 0.01 to 2 percent by weight), and preferably 0.02 to 1 percent by weight, based on the total amount of monomer components for constituting the acrylic polymer. Multifunctional monomers, if present in an amount of more than 2 percent by weight based on the total amount of monomer components for constituting the acrylic polymer, may typically cause the pressure-sensitive adhesive to have an excessively high cohesive strength and thereby have insufficient tackiness. In contrast, multifunctional monomers, if present in an excessively small amount (e.g., less than 0.01 percent by weight based on the total amount of monomer components for constituting the acrylic polymer), may cause, for example, the pressure-sensitive adhesive to have an insufficient cohesive strength.

Exemplary copolymerizable monomers other than the polar-group-containing monomers and the multifunctional monomers include (meth)acrylic esters other than the alkyl (meth)acrylates, including (meth)acrylic esters each having an alicyclic hydrocarbon group, such as cyclopentyl (meth)acrylates, cyclohexyl (meth)acrylates, and isobornyl (meth) acrylates; vinyl esters such as vinyl acetate and vinyl propionate; aromatic vinyl compounds such as styrene and vinyltoluene; olefins or dienes such as ethylene, butadiene, isoprene, and isobutylene; vinyl ethers such as vinyl alkyl ethers; and vinyl chloride.

(Polymerization Initiator)

The preparation of the acrylic polymer as the base polymer (namely, the formation of the bubble-containing pressure-sensitive adhesive layer) preferably employs a curing reaction by the action of an active energy ray (also called "active energy light") with a photopolymerization initiator (photoinitiator). Specifically, the bubble-containing pressure-sensitive adhesive may contain one or more photoinitiators. The resulting bubble-containing pressure-sensitive adhesive is curable by the action of an active energy ray. Accordingly, a bubble-containing pressure-sensitive adhesive layer structurally stably containing bubbles can be easily formed by curing the pressure-sensitive adhesive containing bubbles by the action of an active energy ray. In addition, such a pressure-sensitive adhesive (active-energy-ray-curable pressure-sensitive adhesive) that is curable through a curing reaction with an active energy ray (of which a curing reaction with ultraviolet rays is preferred) generally employs substantially no organic solvent, thereby less emits outgases, and shows satisfactorily low VOC emission. The use of photoinitiators is further advantageous in a shorter polymerization time. Each of different photoinitiators may be used alone or in combination.

Examples of the photoinitiators include, but are not limited to, benzoin ether photoinitiators, acetophenone photoinitiators, α-ketol photoinitiators, aromatic sulfonyl chloride photoinitiators, photo-activatable oxime photoinitiators, benzoin photoinitiators, benzil photoinitiators, benzophenone photoinitiators, ketal photoinitiators, and thioxanthone photoinitiators.

Specifically, exemplary benzoin ether photoinitiators include benzoin methyl ether, benzoin ethyl ether, benzoin propyl ether, benzoin isopropyl ether, benzoin isobutyl ether, 2,2-dimethoxy-1,2-diphenylethan-1-one, and anisole methyl ether. Exemplary acetophenone photoinitiators include 2,2-diethoxyacetophenone, 2,2-dimethoxy-2-phenylacetophenone, 1-hydroxycyclohexyl phenyl ketone, 4-phenoxydichloroacetophenone, and 4-(t-butyl)dichloroacetophenone. Exemplary α-ketol photoinitiators include 2-methyl-2-hydroxypropiophenone and 1-[4-(2-hydroxyethyl)phenyl]-2-methylpropan-1-one. Exemplary aromatic sulfonyl chloride photoinitiators include 2-naphthalenesulfonyl chloride. Exemplary photo-activatable oxime photoinitiators include 1-phenyl-1,1-propanedione-2-(o-ethoxycarbonyl)-oxime.

Exemplary benzoin photoinitiators include benzoin. Exemplary benzil photoinitiators include benzil (dibenzoyl).

Exemplary benzophenone photoinitiators include benzophenone, benzoylbenzoic acid, 3,3'-dimethyl-4-methoxybenzophenone, polyvinylbenzophenone, and α-hydroxycyclohexyl phenyl ketone. Exemplary ketal photoinitiators include benzil dimethyl ketal. Exemplary thioxanthone photoinitiators include thioxanthone, 2-chlorothioxanthone, 2-methylthioxanthone, 2,4-dimethylthioxanthone, isopropylthioxanthone, 2,4-diisopropylthioxanthone, and dodecylthioxanthone.

Though not critical, such photoinitiators may be used in an amount within the range of typically 0.01 to 5 parts by weight and preferably 0.05 to 3 parts by weight, per 100 parts by weight of total monomer components for constituting the base polymer in the bubble-containing pressure-sensitive adhesive [e.g., total monomer components for constituting an acrylic polymer].

Upon activation of photoinitiators, it is important that an active energy ray be applied to the bubble-containing pressure-sensitive adhesive. Exemplary active energy rays include ionizing radiation such as alpha ray, beta ray, gamma ray, neutron beams, and electron beams; and ultraviolet rays, of which ultraviolet rays are preferred. Irradiation conditions of the active energy ray, such as irradiation energy and irradiation time, are not especially limited, as long as the photoinitiators are activated to cause the reactions of monomer components.

(Other Components)

The bubble-containing pressure-sensitive adhesive for use in the present invention may further contain any of suitable additives according to necessity, in addition to the components (e.g., fluorochemical surfactants, monomer components for constituting the base polymer, hollow microspheres, and polymerization initiators). Typically, the bubble-containing pressure-sensitive adhesive may further contain suitable additives corresponding to the type of the base polymer. Examples of such additives include crosslinking agents such as polyisocyanate crosslinking agents, silicone crosslinking agents, epoxy crosslinking agents, and alkyl-etherified melamine crosslinking agents; tackifiers including tackifiers that are solid, semisolid, or liquid at ambient temperature (room temperature) and are made from materials such as rosin derivative resins, polyterpene resins, petroleum resins, and oil-soluble phenolic resins; plasticizers; fillers; age inhibitors; and colorants such as dyes and pigments.

The bubble-containing pressure-sensitive adhesive layer herein is preferably colored from the viewpoint of the graphical design function of the decorative panel. The bubble-containing pressure-sensitive adhesive layer is more preferably colored gray or dark gray for allowing the presence of the tape to be inconspicuous. The coloring may be carried out by adding pigments (coloring pigments) in such an amount that does not adversely affect, for example, the photopolymerization.

To color the bubble-containing pressure-sensitive adhesive layer black, a carbon black, for example, may be used. The amount of the carbon black is typically preferably 0.15 part by weight or less (e.g., 0.001 to 0.15 part by weight), and more preferably 0.01 to 0.12 part by weight, per 100 parts by weight of total monomer components for constituting the base polymer in the bubble-containing pressure-sensitive adhesive [e.g., total monomer components for constituting an acrylic polymer]. This amount is preferable from the viewpoints of degree of coloring and of not inhibiting the photopolymerization reaction.

The bubble-containing pressure-sensitive adhesive for use herein may be prepared by blending components such as monomer components for constituting the base polymer (e.g., alkyl (meth)acrylates), photoinitiators, and additives with one another according to a known technique. Where necessary typically for adjusting viscosity, the monomer components may be partially polymerized. For example, a bubble-containing pressure-sensitive adhesive may be prepared in the following manner. (i) One or more monomer components (e.g., alkyl (meth)acrylates and other copolymerizable monomers) for the formation of the base polymer, and one or more photoinitiators are mixed to give a monomer mixture; and (ii) the monomer mixture is subjected to photopolymerization (e.g., polymerization by the action of an ultraviolet ray) to give a composition (syrup) in which only part of the monomer components is polymerized. Next, (iii) the resulting syrup is combined with other components such as hollow microspheres, fluorochemical surfactants, and other additives according to necessity to give a blend. When bubbles are to be contained in the pressure-sensitive adhesive, (iv) bubbles are introduced and mixed with the blend obtained in the step (iii) to give a bubble-containing pressure-sensitive adhesive. The way to prepare the bubble-containing pressure-sensitive adhesive is not limited to the above procedure, and the adhesive may be prepared, for example, by previously incorporating fluorochemical surfactants and hollow microspheres into the monomer mixture before the preparation of the syrup. As used herein the term "syrup" refers to a "composition in the form of syrup".

Bubbles, when to be contained in the pressure-sensitive adhesive layer, are preferably incorporated as the last component into the pressure-sensitive adhesive as in the above preparation process. This helps the bubbles to be stably incorporated and to stably exist in the pressure-sensitive adhesive layer. A blend before incorporation of bubbles (e.g., the blend prepared in the step (iii)) preferably has a high viscosity, so as to hold the mixed bubbles stably. Though not critical, the blend before incorporation of bubbles has a viscosity of, for example, preferably 5 to 50 Pa·s, and more preferably 10 to 40 Pa's, as measured at a temperature of 30°C using a BH type viscometer with a No. 5 rotor at a number of revolutions of 10 rpm. The blend, if having a viscosity of less than 5 Pa·s, may not satisfactorily hold bubbles, because incorporated bubbles may immediately coalesce to escape out of the system. In contrast, the blend, if having an excessively high viscosity of more than 50 Pa·s, may be difficult to give a pressure-sensitive adhesive layer satisfactorily through coating. The viscosity of the blend can be controlled, for example, by incorporating polymer components such as acrylic rubbers and thickening additives; and/or by partially polymerizing monomer components for constituting the base polymer.

The way to incorporate bubbles in the preparation of the bubble-containing pressure-sensitive adhesive is not especially limited and may be any known process for incorporating such bubbles into compositions. An exemplary device for use herein is one that includes a stator and a rotor, in which the stator includes a disc having a through hole at the center part and having a multiplicity of fine teeth thereon, and the rotor faces the stator and includes a disc having a multiplicity of fine teeth thereon, as in the stator. Using this device, the blend to which bubbles are to be contained is introduced in between the teeth of the stator and the teeth of the rotor, and a gaseous component for constituting bubbles (bubble-constituting gas) is introduced via the through hole into the blend while rotating the rotor at high speed, to thereby give a bubble-containing pressure-sensitive adhesive containing finely divided and dispersed bubble-constituting gas.

To suppress or prevent coalescence of bubbles, it is desirable to carry out the steps from the incorporation of bubbles to the formation of the pressure-sensitive adhesive layer continuously as a series of steps. Specifically, it is desirable that a bubble-containing pressure-sensitive adhesive is prepared while incorporating bubbles thereinto in the above manner, and the prepared bubble-containing pressure-sensitive adhesive is immediately subjected to the formation of the bubble-containing pressure-sensitive adhesive layer.

[Double-Sided Pressure-Sensitive Adhesive Tape for Fixing Decorative Panels]

A double-sided pressure-sensitive adhesive tape for fixing decorative panels according to the present invention includes at least a bubble-containing pressure-sensitive adhesive layer formed from the bubble-containing pressure-sensitive adhesive. The double-sided pressure-sensitive adhesive tape has adhesive faces as both sides thereof. Regarding the structure thereof, specific examples of the pressure-sensitive adhesive tape include (1) a substrate-supported double-sided pressure-sensitive adhesive tape which structurally includes a substrate, a bubble-containing pressure-sensitive adhesive layer arranged on one side of the substrate, and a bubble-containing pressure-sensitive adhesive layer or another pressure-sensitive adhesive layer than the bubble-containing pressure-sensitive adhesive layer (of which the bubble-containing pressure-sensitive adhesive layer is preferred) arranged on the other side of the substrate; and (2) a substrate-less double-sided pressure-sensitive adhesive tape which does not include a substrate but structurally includes a pressure-sensitive adhesive unit composed of the bubble-containing pressure-sensitive adhesive layer alone. Among them, the substrate-less double-sided pressure-sensitive adhesive tape is preferred from the viewpoints of conformability to curved surface and bump absorptivity (conformability to bumps).

The pressure-sensitive adhesive tape according to the present invention may be wound into a roll or may be stacked as sheets. Specifically, the pressure-sensitive adhesive tape according to the present invention may be in the form typically of a sheet or tape. The pressure-sensitive adhesive tape, when in the state of or in the form of being wound as a roll, may be in the state of or in the form of being wound as a roll while the adhesive faces thereof are protected by a release film (separator).

Exemplary processes for forming a bubble-containing pressure-sensitive adhesive layer in the pressure-sensitive adhesive tape according to the present invention include, but are not limited to, a process of applying the bubble-containing pressure-sensitive adhesive (bubble-containing pressure-sensitive adhesive composition) to a suitable carrier such as a release film or substrate to form a coated layer, and curing the coated layer by the action of an active energy ray. Though not critical, the active energy ray application is preferably performed by applying an ultraviolet ray from both sides of the layer each at an illuminance of 3 to 12 (mW/cm$^2$) for a duration of 3 to 5 (minutes). This condition is preferred for higher degree of polymerization of the polymer (base polymer) in the pressure-sensitive adhesive layer and for less VOC emission of the resulting pressure-sensitive adhesive layer. Though not critical, the degree of polymerization is preferably 97.5% or more, and more preferably 98.5% or more.

Though not critical, the thickness of the bubble-containing pressure-sensitive adhesive layer may be chosen within the range of typically 200 to 5000 μm, preferably 300 to 4000 μm, and more preferably 400 to 3000 μm. The bubble-containing pressure-sensitive adhesive layer, if having a thickness of less than 200 μm, may show insufficient cushioning properties to cause the pressure-sensitive adhesive tape to have insufficient adhesiveness to curved surfaces and convex-concave surfaces. The bubble-containing pressure-sensitive adhesive layer, if having a thickness of more than 5000 μm, may be difficult to have a uniform thickness and thereby be difficult to give a pressure-sensitive adhesive tape having a uniform thickness. The bubble-containing pressure-sensitive adhesive layer may have a single-layer structure or multilayer structure.

(Substrate)

When the pressure-sensitive adhesive tape according to the present invention includes a substrate, examples of the substrate include, but are not limited to, suitable thin articles including paper substrates such as papers; fibrous substrates such as fabrics, nonwoven fabric, and nets; metallic substrates such as metallic foils and metal sheets; plastic substrates including plastic films and sheets; rubber substrates such as rubber sheets; foams such as sheet foams; and laminates of these articles (of which preferred are laminates of a plastic substrate with another substrate, and laminates of plastic films or sheets with each other). Exemplary materials for the plastic films and sheets include olefinic resins containing an $\alpha$-olefin as a monomer component, such as polyethylenes (PEs), polypropylenes (PPs), ethylene-propylene copolymers, and ethylene-vinyl acetate copolymers (EVAs); polyester resins such as poly(ethylene terephthalate)s (PETs), poly(ethylene naphthalate)s (PENs), and poly(butylene terephthalate)s (PBTs); poly(vinyl chloride)s (PVCs); vinyl acetate resins; poly(phenylene sulfide)s (PPSs); amide resins such as polyamides (nylons) and wholly aromatic polyamides (aramids); polyimide resins; and poly(ether ether ketone)s (PEEKS). Each of different materials may be used alone or in combination.

A plastic substrate, when used as the substrate, may be controlled in its deformation properties such as elongation typically by a stretching process. The substrate is preferably one which does not adversely affect the transmission of active energy rays.

The thickness of the substrate may be suitably set according typically to the strength, flexibility, and intended use without limitation, but is generally about 1000 $\mu$m or less (for example about 1 to 1000 $\mu$m), preferably about 1 to 500 $\mu$m, and more preferably about 3 to 300 $\mu$m. The substrate may have a single-layer structure or multilayer structure.

For increasing adhesion typically to the bubble-containing pressure-sensitive adhesive layer, the substrate may have been subjected to a customary surface treatment such as corona treatment, chromate treatment, exposure to ozone, exposure to flame, exposure to high-voltage electric shock, treatment with ionizing radiation, and other oxidization treatments by a chemical or physical procedure. In addition or alternatively, the surface may have been coated typically with a primer or a release agent.

(Other Pressure-Sensitive Adhesive Layer Than Bubble-Containing Pressure-Sensitive Adhesive Layer)

When the pressure-sensitive adhesive tape according to the present invention includes another pressure-sensitive adhesive layer than the bubble-containing pressure-sensitive adhesive layer, the pressure-sensitive adhesive layer may be formed according to a known process for forming a pressure-sensitive adhesive layer using a known pressure-sensitive adhesive. Examples of the pressure-sensitive adhesive include acrylic pressure-sensitive adhesives, rubber pressure-sensitive adhesives, vinyl alkyl ether pressure-sensitive adhesives, silicone pressure-sensitive adhesives, polyester pressure-sensitive adhesives, polyamide pressure-sensitive adhesives, urethane pressure-sensitive adhesives, fluorine pressure-sensitive adhesives, and epoxy pressure-sensitive adhesives. The thickness of the pressure-sensitive adhesive layer other than the bubble-containing pressure-sensitive adhesive layer is not critical and may be chosen as appropriate according typically to the intended use and method of use.

(Separator)

The pressure-sensitive adhesive tape according to the present invention may further include a separator (also referred to as a "release liner" or "release film") to protect the surfaces (adhesive faces) of the pressure-sensitive adhesive layers such as the bubble-containing pressure-sensitive adhesive layer before use. The separator is removed when the adhesive faces which have been protected by the separator are used. Specifically, it is removed when the pressure-sensitive adhesive tape is applied to adherends.

The separator may for example be a customary release paper. Specifically, exemplary separators usable herein include separators composed of a base and a release coating layer made from a release agent (parting agent) and present on at least one side of the base; separators composed of a base having low adhesiveness and made from any of fluorine-containing polymers (e.g., polytetrafluoroethylenes, polychlorotrifluoroethylenes, poly(vinyl fluoride)s, poly (vinylidene fluoride)s, tetrafluoroethylene-hexafluoropropylene copolymers, and chlorofluoroethylene-vinylidene fluoride copolymers); and separators composed of a base having low adhesiveness and made from any of nonpolar polymers (e.g., olefinic resins such as polyethylenes and polypropylenes). The separator may also be used as a support or carrier for supporting the bubble-containing pressure-sensitive adhesive layer.

The separator for use herein is preferably a separator including a base for release liner (release liner base) and a release coating layer present on at least one side of the base. Exemplary release liner bases include plastic base films (synthetic resin films) such as polyester films (e.g., poly(ethylene terephthalate) films), olefinic resin films (e.g., polyethylene films and polypropylene films), poly(vinyl chloride) films, polyimide films, polyamide films (nylon films), and rayon films; papers (e.g., woodfree paper, Japanese paper, kraft paper, glassine paper, synthetic paper, and topcoat paper); and laminates (multilayer assemblies having two or three layers) of these materials prepared typically through lamination or coextrusion.

Exemplary release agents for constituting the release coating layer include, but are not limited to, silicone release agents, fluorine release agents, and long-chain alkyl release agents. Each of different release agents may be used alone or in combination.

The separator is not limited on its thickness and formation process.

(Properties of Double-Sided Pressure-Sensitive Adhesive Tape for Fixing Decorative Panels)

The double-sided pressure-sensitive adhesive tape for fixing decorative panels according to the present invention preferably has satisfactory adhesiveness (high adhesiveness). Specifically, an adhesive face (adhesive face of the bubble-containing pressure-sensitive adhesive layer) of the double-sided pressure-sensitive adhesive tape has a bond strength (adhesive strength) (180-degree peel, at a tensile speed of 50 mm per minute) of preferably 20 newtons per 25 mm (N/25 mm) or more, and more preferably 25 to 60 N/25 mm with respect to a poly(methyl methacrylate) (PMMA) plate. In this connection, the "bond strength" is also referred to as "peel force." The double-sided pressure-sensitive adhesive tape according to the present invention, as having such high adhesiveness, may give high reliability in the application (fixation) of a decorative panel without peeling off of the decorative panel (decorative sheet), even when the decorative panel (decorative sheet) is relatively heavy, or even when the decorative panel (decorative sheet) is fixed to a curved surface, or even when the contact area with the adherend is small typically in the case that the decorative panel (decorative sheet) to be fixed is narrow. The adhesiveness (bond strength) may be controlled by adjusting, for example, the composition of the pressure-sensitive adhesive, the amount of contained bubbles, the thickness of the pressure-sensitive adhesive layer, and the content of crosslinking agents.

The double-sided pressure-sensitive adhesive tape for fixing decorative panels according to the present invention has satisfactory bump absorptivity (this property is also referred to as "conformability to bumps" or "conformability to convex-concave surfaces"). The way to evaluate the bump absorptivity is not limited, but the bump absorptivity may be evaluated, for example, by an effective bonding area (effective bonding area percentage) with respect to an adherend having specific bumps (e.g., bumps (steps) of about 50 to 100 $\mu$m). The double-sided pressure-sensitive adhesive tape for fixing decorative panels according to the present invention may utilize substantially 100% of an effective bonding area (have an effective bonding area percentage of substantially 100%) with respect to bumps of 50 to 100 $\mu$m in level difference and is advantageously applicable to an adherend having such bumps. As having satisfactory bump absorptivity, the double-sided pressure-sensitive adhesive tape may be satisfactorily applied and may remain therein stably during application, even to adherends having complicated surface shapes and having curved surfaces and/or bumps.

The double-sided pressure-sensitive adhesive tape for fixing decorative panels according to the present invention has excellent resilience resistance. As used herein the term "resilience resistance" refers to a property by which the junction face (adhesive face) resists the repulsive force of a rigid member when the rigid member is affixed typically to a curved surface through the double-sided pressure-sensitive adhesive tape. The term "excellent resilience resistance" refers to a state where the tape is resistant to separation or lifting even in fixation with such a member giving a repulsive force.

The double-sided pressure-sensitive adhesive tape for fixing decorative panels according to the present invention preferably has pressure-sensitive adhesive layers formed from an active-energy-ray-curable (particularly preferably ultraviolet-ray-curable) acrylic pressure-sensitive adhesive. This is because the resulting double-sided pressure-sensitive adhesive tape hardly emits volatile organic compounds (VOC) and shows so-called "low VOC emission." For example, a pressure-sensitive adhesive tape including a polyethylene foam substrate and, applied thereon, a solvent pressure-sensitive adhesive is not preferred because of large (high) emission of VOC. For ensuring low VOC emission, the double-sided pressure-sensitive adhesive tape preferably has a toluene emission of 15 $\mu$g/g or less (emits toluene, if any, in an amount of 15 $\mu$g/g or less). The double-sided pressure-sensitive adhesive tape, when showing such low VOC emission, is preferred for its environmental friendliness. The tape is also preferred from the viewpoint of safety when the tape is used in room (for fixing decorative panels for use typically in office automation appliances, household electrical appliances, flooring materials, and kitchen materials).

The double-sided pressure-sensitive adhesive tape for fixing decorative panels according to the present invention has a toluene emission of preferably 15 $\mu$g/g or less, more preferably 10 $\mu$g/g or less, and furthermore preferably 8 $\mu$g/g or less. The toluene emission employed herein is a value measured according to the following [Method for Measuring Toluene Emission].

[Method for Measuring Toluene Emission]

A specimen is prepared by cutting a piece of a predetermined size (area: 5 cm$^2$) from the double-sided pressure-sensitive adhesive tape, removing the separator from the cut piece, applying one side (adhesive face) of the cut piece to an aluminum foil, while remaining the other side open. The specimen is weighed and placed in a 21.5-mL vial, followed by tightly stopping the vial. The vial containing the specimen is then heated in a head space autosampler at 80°C for 2 hours, and 1.0 ml of a gas sampled therefrom under heating is injected into a gas chromatographic system (GC system) to measure the amount of toluene. Based on this, the amount ($\mu$g/g) of emitted toluene per unit weight of the specimen (double-sided pressure-sensitive adhesive tape) is calculated as a toluene emission. The gas chromatographic measurement is performed under the following conditions.

(Conditions for Gas Chromatographic Measurement)

- Column: DB-FFAP 1.0 $\mu$m (0.532 mm in diameter and 30 m in length)
- Carrier Gas: He 5.0 mL/min
- Column Head Pressure: 24.3 kPa (40°C)
- Injection Port: sprit (with a sprit ratio of 12:1, at a temperature of 250°C)
- Column Temperature: 40°C (0 min) -<+10°C/min>-250°C (9 min) [this means that the temperature is elevated from 40°C to 250°C at a rate of temperature rise of 10°C/min and is held at 250°C for 9 minutes]
- Detector: frame ionization detector (FID) (temperature: 250°C)

The double-sided pressure-sensitive adhesive tape for fixing decorative panels according to the present invention, when used in applications where the tape should be darkly colored, is preferably gray or dark gray and has an L* (L* of the surface of the bubble-containing pressure-sensitive adhesive layer in the double-sided pressure-sensitive adhesive tape) as prescribed in the (L*, a*, b*) color space of preferably 30 to 60 and more preferably 30 to 55. The other parameters a* and b* prescribed in the (L*, a*, b*) color space may be suitably chosen according to the L*. The a* and b* are typically preferably each in the range of -10 to 10, more preferably -5 to 5, and furthermore preferably - 3 to 3.

In a preferred embodiment for having the high adhesiveness, low VOC emission, satisfactory bump absorptivity, and good resilience resistance, the double-sided pressure-sensitive adhesive tape for fixing decorative panels according to the present invention has, for example, the following structure or configuration. Specifically, in the preferred embodiment, the base polymer of the acrylic pressure-sensitive adhesive for constituting the bubble-containing pressure-sensitive adhesive layer includes 2-ethylhexyl acrylate (2-EHA) and acrylic acid (AA) as principal components with the ratio between the two monomers [2-EHA/AA] (by weight) of 94/6 to 88/12. The base polymer has a degree of polymerization of 97.5% or more, and preferably 98.5% or more. In addition, the bubble-containing pressure-sensitive adhesive layer contains bubbles in an amount (in a bubble fraction) of 5 to 20 percent by volume and contains hollow glass balloons in a content of 10 to 35 percent by volume (preferably 15 to 35 percent by volume).

The double-sided pressure-sensitive adhesive tape for fixing decorative panels according to the present invention includes a pressure-sensitive adhesive layer containing bubbles and/or hollow microspheres, may thereby exhibit satisfactory adhesiveness to curved surfaces and convex-concave surfaces, and exhibit excellent resilience resistance. The double-sided pressure-sensitive adhesive tape, when further including a fluorochemical surfactant in the pressure-sensitive adhesive layer, exhibits these properties more satisfactorily, because the pressure-sensitive adhesive layer shows less frictional drag between the hollow microspheres and the base polymer in the pressure-sensitive adhesive layer and thereby shows high stress dispersibility. The pressure-sensitive adhesive tape, when employing an active-energy-ray-curable acrylic pressure-sensitive adhesive as the pressure-sensitive adhesive, shows satisfactorily low VOC emission.

The double-sided pressure-sensitive adhesive tape for fixing decorative panels according to the present invention is used for fixing a decorative panel to an adherend. Specifically, it is desirably used typically in office automation appliances such as personal computers; household electrical appliances such as flat-panel displays (television sets) and refrigerators; and housing construction materials such as built-in kitchens, wall-finishing materials, and flooring materials. Exemplary preferred materials for the decorative panel and the adherend include (polycarbonate (PC))/(acrylonitrile-butadiene-styrene (ABS) resin) alloys, poly(methyl methacrylate) (PMMA) resins, glass, ABS, and PC.

EXAMPLES

The present invention will be illustrated in further detail with reference to a working example below. It should be noted, however, that the example is never construed to limit the scope of the present invention.

EXAMPLE 1

A partially polymerized composition (syrup) was prepared by blending 90 parts by weight of 2-ethylhexyl acrylate with 10 parts by weight of acrylic acid both as monomer components to give a monomer mixture; mixing the monomer mixture with photoinitiators, i.e., 0.05 part by weight of the trade name "IRGACURE 651" (supplied by Ciba Specialty Chemicals Corporation) and 0.05 part by weight of the trade name "IRGACURE 184" (supplied by Ciba Specialty Chemicals Corporation); and applying an ultraviolet ray to the resulting mixture to a viscosity of about 15 Pa·s. The viscosity was measured with a BH type viscometer using a No. 5 rotor at 10 rpm and at a measurement temperature of 30°C. To 100 parts by weight of the syrup were added 0.04 part by weight of a photoinitiator under the trade name "IRGACURE 651" (supplied by Ciba Specialty Chemicals Corporation), 0.1 part by weight of 1,6-hexanediol diacrylate, 0.7 part by weight of a fluorochemical surfactant under the trade name "Megafac F-477" (supplied by DIC Corporation), and 0.02 part by weight of a carbon black. The resulting syrup was further combined with hollow glass balloons under the trade name "CEL-STAR Z-27" (supplied by Tokai Kogyo Co., Ltd.) in an amount of 30 parts by volume per 100 parts by volume of the total volume of the syrup to give a pressure-sensitive adhesive precursor. The hollow glass balloons in the pressure-sensitive adhesive precursor occupied about 23 percent by volume of the total volume of the pressure-sensitive adhesive precursor. Bubbles were then introduced into the pressure-sensitive adhesive precursor by introducing nitrogen into the precursor using a device. This device includes a stator and a rotor, in which the stator includes a disc having a through hole at the center part and having a multiplicity of fine teeth thereon, and the rotor faces the stator and includes a disc having a multiplicity of fine teeth thereon as in the stator. The bubbles were introduced into the precursor to an amount of about 15 percent by volume based on the total volume of the discharged composition. Thus, a bubble-containing pressure-sensitive adhesive (bubble-containing pressure-sensitive adhesive composition) was prepared.

The bubble-containing pressure-sensitive adhesive was introduced onto a roll coater for wet lamination through a tube having a diameter of 19 mm and a length of about 1.5 m, and using the roll coater, the bubble-containing pressure-sensitive adhesive was applied to between two plies of a poly(ethylene terephthalate) base (separator) so as to give a layer of the bubble-containing pressure-sensitive adhesive with a thickness after drying and curing of 0.8 mm. The poly(ethylene terephthalate) base had a releasably treated surface as one surface thereof and the bubble-containing pressure-sensitive adhesive was applied to between two treated surfaces. In other words, the bubble-containing pressure-sensitive adhesive was held between poly(ethylene terephthalate) bases. Next, an ultraviolet ray was applied at an illuminance of 5 mW/cm$^2$ to both sides of the assembly for 4 minutes to cure the bubble-containing pressure-sensitive adhesive. Thus, a pressure-sensitive adhesive tape (substrate-less double-sided pressure-sensitive adhesive tape) having a pressure-sensitive adhesive layer formed from the bubble-containing pressure-sensitive adhesive was prepared. The resulting tape had a degree of polymerization of 98.9% in the base polymer of the pressure-sensitive adhesive layer.

COMPARATIVE EXAMPLE 1

A pressure-sensitive adhesive tape was prepared by the procedure of Example 1, except for not incorporating hollow glass balloons, not introducing nitrogen into the pressure-sensitive adhesive precursor, and thereby not introducing bubbles thereinto. The resulting tape had a degree of polymerization of 98.0% in the base polymer of the pressure-sensitive adhesive layer.

[Testing and Evaluation]

The double-sided pressure-sensitive adhesive tapes (double-sided pressure-sensitive adhesive tapes for fixing decorative panels) prepared in the example and comparative example were subjected to a bump absorptivity test, a resilience resistance test, and measurements of bond strength (to PMMA), lightness, and toluene emission. The bump absorptivity test, resilience resistance test, and measurements of bond strength and lightness were performed in the following manner; and the measurement of toluene emission was performed in the manner mentioned above. The results of testing and evaluations are shown in Table 1.

(1) Bump Absorptivity Test (Fig. 1)

Four plies of a spacer 2 (PET film, spacer width of 20 mm) having a thickness of 50 μm were arranged at intervals of 20 mm and fixed on a transparent acrylic plate (base plate) 1.

Independently, one of the adhesive faces of a sample double-sided pressure-sensitive adhesive tape (tape width of 20 mm) was applied to an acrylic plate 20 mm wide (2.0 mm thick) and thereby yielded a measurement sample 3. After removing the separator on the other adhesive face of the double-sided pressure-sensitive adhesive tape therefrom, the measurement sample was affixed to the spacers as illustrated in Fig. 1 through compression bonding with a one-way movement of a 5-kg roller thereon.

Immediately after the compression bonding, the area where the adhesive face of the sample was in intimate contact with the transparent acrylic plate in portions between respective spacers was visually measured while bringing a grid into contact with the backside of the transparent acrylic plate. An effective bonding area percentage (%) was calculated from the measured area according to the following equation. The effective bonding area percentages were calculated in three portions between the respective spacers, and the average of the effective bonding area percentages of the three portions was defined as the "effective bonding area percentage" herein.

```
Effective bonding area percentage (%) = [(area in intimate

contact (bonding area))/(area of tape between spacers)] ×

100
```

In the above equation, the "area of tape between spacers" is 400 mm$^2$.

In Fig. is, the reference sign "1" stands for the transparent acrylic plate (base plate), "2" stands for the spacer, "3" stands for the sample (measurement sample), and "4" (diagonally shaded areas in the bottom view) stands for portions (three portions) where the effective bonding area percentage was measured (and calculated).

(2) Resilience Resistance Test

To an aluminum piece (outer dimensions: 10 mm wide, 90 mm long, and 0.3 mm thick) was affixed, using a hand roller, one of the adhesive faces of a sample double-sided pressure-sensitive adhesive tape which had been cut to the same dimensions as the aluminum piece. Next, the aluminum piece affixed with the double-sided pressure-sensitive adhesive tape was coiled around a circular cylinder 30 mm in diameter so that the aluminum piece was in contact with the cylinder, and the double-sided pressure-sensitive adhesive tape faced outward, and the aluminum piece with the tape was pressed to the cylinder for about 10 seconds and thereby yielded a circular arc sample. In this process, the aluminum piece was coiled in a direction of the long side (side of 90 mm long) thereof.
Next, the separator was removed from the double-sided pressure-sensitive adhesive tape affixed to the aluminum piece, and the resulting sample was affixed to an acrylic plate (2.0 mm thick) using a laminator. After leaving stand at an ambient temperature of 23°C for 24 hours, split distances (heights of the aluminum piece lifted from the acrylic plate) at both ends of the aluminum piece were measured and averaged.

(3) Bond Strength (to PMMA)

The surface of a poly(methyl methacrylate) (PMMA) plate was cleaned by washing with isopropyl alcohol (IPA) in an atmosphere at a temperature of $23\pm2°C$ and relative humidity of 65+5% to give an adherend (test panel) with a clean surface.
A test piece was prepared by cutting a sample double-sided pressure-sensitive adhesive tape to a size of 25 mm wide and 100 mm long, and affixing one of the adhesive faces of the cut tape to the adherend (test panel) through compression bonding with a one-way movement of a 5-kg roller thereon, and bonding the other adhesive face of the double-sided pressure-sensitive adhesive tape to a polyester film 50 $\mu$m thick.
After the compression bonding, the test piece was aged in an atmosphere at a temperature of $23\pm2°C$ and relative humidity of 65+5% for 30 minutes, then subjected to a 180-degree peel test using a tensile tester, and the bond strength (N/25 mm) of the double-sided pressure-sensitive adhesive tape with respect to the adherend was measured. The test was performed at a tensile speed of 50 mm per minute and a peel angle of 180 degrees.

(4) Lightness (L*)

After removing the separator, the double-sided pressure-sensitive adhesive tape was subjected to measurement of the lightness with the Handy Spectrophotometer NF333 supplied by Nippon Denshoku Industries Co., Ltd.
[Table 1]

(TABLE 1)

| | Bond strength (to PMMA) (N/25 mm) | Bump absorptivity test | Resilience resistance test | Lightness | Toluene emission (μg/g) |
|---|---|---|---|---|---|
| | | Effective bonding area percentage (%) | Split distance (mm) | L* | |
| Example 1 | 55 | 100 | 0 | 55 | 6,7 |
| Comparative Example 1 | 16 | 86 | 12 | 64 | 11.4 |

As is demonstrated by the data in Table 1, the double-sided pressure-sensitive adhesive tape according to the present invention excelled in bump absorptivity, resilience resistance, adhesiveness, and low VOC emission (VOC control) and was found to be suitable for fixing decorative panels.

Industrial Applicability

The double-sided pressure-sensitive adhesive tape for fixing decorative panels according to the present invention includes a pressure-sensitive adhesive layer containing bubbles and/or hollow microspheres, may thereby exhibit satisfactory adhesiveness to curved surfaces and convex-concave surfaces, and may exhibit excellent resilience resistance. The double-sided pressure-sensitive adhesive tape, when further including a fluorochemical surfactant in the pressure-sensitive adhesive layer, exhibits these properties more satisfactorily, because the pressure-sensitive adhesive layer shows less frictional drag between the hollow microspheres and the base polymer both in the pressure-sensitive adhesive layer and thereby shows high stress dispersibility. The pressure-sensitive adhesive tape, when employing an active-energy-ray-curable acrylic pressure-sensitive adhesive as the pressure-sensitive adhesive, shows satisfactorily low VOC emission. For these reasons, the double-sided pressure-sensitive adhesive tape according to the present invention is useful for fixing decorative panels to adherends.

Reference Signs List

1 transparent acrylic plate (base plate)
2 spacer (PET film)
3 sample (assembly of the double-sided pressure-sensitive adhesive tape and the acrylic plate affixed to each other)
4 portion where the effective bonding area percentage is measured (and calculated)

**Claims**

1.   A double-sided pressure-sensitive adhesive tape for fixing decorative panels, the adhesive tape comprising a pressure-sensitive adhesive layer containing bubbles and/or hollow microspheres.

2.   The double-sided pressure-sensitive adhesive tape for fixing decorative panels, according to claim 1, wherein the pressure-sensitive adhesive layer is formed from an acrylic pressure-sensitive adhesive including an acrylic polymer as a base polymer, the acrylic polymer containing an alkyl (meth)acrylate as a main monomer component.

3.   The double-sided pressure-sensitive adhesive tape for fixing decorative panels, according to claim 2, wherein the acrylic pressure-sensitive adhesive is an active-energy-ray-curable acrylic pressure-sensitive adhesive that is curable by the action of an active energy ray.

4.   The double-sided pressure-sensitive adhesive tape for fixing decorative panels, according to any one of claims 1 to 3, wherein the adhesive tape has a toluene emission of 15 μg/g or less.

5.    The double-sided pressure-sensitive adhesive tape for fixing decorative panels, according to any one of claims 1 to 4, wherein the adhesive tape has a surface lightness L* of 60 to 30.

Fig. 1

(TOP VIEW)

( BOTTOM VIEW )

**INTERNATIONAL SEARCH REPORT**

| International application No. |
|---|
| PCT/JP2009/006336 |

A.   CLASSIFICATION OF SUBJECT MATTER
*C09J7/00*(2006.01)i, *C09J11/00*(2006.01)i, *C09J133/04*(2006.01)i

According to International Patent Classification (IPC) or to both national classification and IPC

B.   FIELDS SEARCHED

Minimum documentation searched (classification system followed by classification symbols)
C09J1/00-201/10

Documentation searched other than minimum documentation to the extent that such documents are included in the fields searched
Jitsuyo Shinan Koho          1922-1996   Jitsuyo Shinan Toroku Koho    1996-2010
Kokai Jitsuyo Shinan Koho    1971-2010   Toroku Jitsuyo Shinan Koho    1994-2010

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X | JP 63-072532 A  (MINNESOTA MINING & MFG CO.), 02 April 1988 (02.04.1988), claims; page 4, lower left column; page 8, upper left column; examples 13 to 66 & EP 257984 A          & AU 8777210 A & BR 8704335 A          & ZA 8706122 A & ES 2031902 T3         & CA 1313086 C & KR 96-01363 B1 | 1-5 |
| Y | JP 8-053653 A  (Sony Chemicals Corp.), 27 February 1996 (27.02.1996), claims; examples; paragraphs [0008], [0035] (Family: none) | 1-5 |

☒ Further documents are listed in the continuation of Box C.          ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 04 February, 2010 (04.02.10) | 16 February, 2010 (16.02.10) |

| Name and mailing address of the ISA/ Japanese Patent Office | Authorized officer |
|---|---|
| Facsimile No. | Telephone No. |

Form PCT/ISA/210 (second sheet) (April 2007)

**INTERNATIONAL SEARCH REPORT**

International application No.

PCT/JP2009/006336

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2001-040300 A  (Konishi Co., Ltd.),<br>13 February 2001 (13.02.2001),<br>paragraphs [0024], [0025]<br>(Family: none) | 1-5 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000110330 A